# FASCICULE DE BREVET EUROPEEN

(11) **EP 1 293 701 B1**
(45) Date de publication et mention de la délivrance du brevet: **08.12.2004**
(21) Numéro de dépôt: 02292168.8
(22) Date de dépôt: 03.09.2002
(51) Int. Cl.: F16F 1/373

(54) **Support antivibratoire et dispositif antivibratoire comportant un tel support**
Schwingungsdämpfendes Lager und Schwingungsdämpfungseinrichtung mit solchem Lager
Antivibration support and antivibration device comprising the same

(30) Priorité: 12.09.2001 FR 0111790
(43) Date de publication de la demande: 19.03.2003
(73) Titulaire: HUTCHINSON, 75008 Paris (FR)
(72) Inventeur: Porpe, Christophe, 28630 Le Coudray (FR); Collet, Loic, 28160 Gohory (FR)
(74) Mandataire: Burbaud, Eric

(56) Documents cités:
- EP-A- 0 771 964
- FR-A- 2 747 167
- GB-A- 1 389 731
- PATENT ABSTRACTS OF JAPAN vol. 1999, no. 11, 30 septembre 1999 (1999-09-30) -& JP 11 166568 A (TOYODA GOSEI CO LTD), 22 juin 1999 (1999-06-22)

## Description

La présente invention est relative aux supports antivibratoires et aux dispositifs antivibratoires comportant de tels supports.

Plus particulièrement, l'invention concerne un support antivibratoire destiné à être interposé aux fins d'amortissement et de liaison entre deux éléments rigides (par exemple, une boîte de vitesses de véhicule et la caisse de ce véhicule), ce support comportant :
- une première armature rigide destinée à être reliée au premier élément rigide par l'intermédiaire d'une tige de liaison,
- une deuxième armature rigide destinée à être reliée au deuxième élément rigide et comportant une ouverture centrale destinée à être traversée par ladite tige de liaison,
- un corps en élastomère reliant la première armature à la deuxième armature, ce corps en élastomère étant adapté pour supporter une charge permanente selon un premier axe vertical et comportant un puits central s'étendant selon ledit premier axe au centre de l'ouverture centrale de la deuxième armature, ledit puits central étant destiné à recevoir un la tige de liaison et ladite tige de liaison étant destinée coopérer par butée avec le corps en élastomère au niveau dudit puits central pour limiter les débattements relatifs entre les première et deuxième armatures selon deux axes horizontaux perpendiculaires entre eux.

Le document JP 11166568-A présente par exemple un tel support antivibratoire.

Les supports antivibratoires connus de ce type ont des performances satisfaisantes, mais présentent l'inconvénient de subir une usure relativement rapide du corps en élastomère au niveau du puits central.

La présente invention a notamment pour but de pallier cet inconvénient.

A cet effet, selon l'invention, un support antivibratoire du genre en question est caractérisé en ce que le puits central est revêtu d'une chemise intérieure adhérisée au corps en élastomère de façon à être entièrement solidaire dudit corps en élastomère, cette chemise intérieure étant réalisée en un matériau souple sensiblement inextensible et n'offrant sensiblement pas de résistance en flexion.

Grâce à ces dispositions, on constate une nette diminution de l'usure du corps en élastomère au niveau du puits central.

Cette diminution d'usure est due à deux phénomènes :
- d'une part, lorsque la tige de liaison vient en butée contre la paroi du puits central et que ladite tige de liaison est animée d'un mouvement vertical par rapport à ladite paroi, la chemise intérieure évite les frottements entre la tige de liaison et l'élastomère et permet donc d'éviter les phénomènes d'attrition de l'élastomère,
- et d'autre part, lorsque la tige de liaison vient en butée contre la paroi du puits central, du fait que la chemise intérieure est inextensible et adhérisée au corps en élastomère, cette chemise intérieure répartit les contraintes dans le corps en élastomère tout autour du puits central, alors que ces contraintes étaient localisées au niveau de la ligne de contact entre la tige de liaison et la paroi du puits central dans les supports de l'art antérieur : ainsi, on mobilise une plus grande masse d'élastomère pour reprendre les efforts de butée de la tige de liaison contre la paroi du puits central, de sorte qu'on diminue le niveau de contrainte locale du corps en élastomère, ce qui augmente très notablement la durée de vie dudit corps en élastomère.

Dans des modes de réalisation préférés de l'invention, on peut éventuellement avoir recours en outre à l'une et/ou à l'autre des dispositions suivantes
- la chemise intérieure du puits central est réalisée en tissu ;
- le tissu de la chemise intérieure comprend au moins du polyester ;
- le tissu de la chemise intérieure comprend au moins du TEFLON® ;
- le corps en élastomère comporte des fentes interposées entre le trou central de la deuxième armature et le puits central ;
- le corps en élastomère comporte deux fentes en arc de cercle centrées sur le premier axe et disposées de part et d'autre du puits central selon un deuxième axe perpendiculaire au premier axe ;
- le corps en élastomère comporte des alvéoles disposées entre les première et deuxième armature selon le premier axe, pour assouplir ledit corps en élastomère parallèlement audit premier axe ;
- les alvéoles sont des trous ménagés dans le corps en élastomère selon un troisième axe horizontal.

Par ailleurs, l'invention a également pour objet un dispositif antivibratoire comprenant :
- un support antivibratoire tel que défini ci-dessus,
- un premier élément rigide fixé à la première armature par l'intermédiaire d'une tige de liaison rigide qui s'étend selon le premier axe à l'intérieur du puits central du corps en élastomère, avec un faible jeu horizontal entre ladite tige de liaison et le corps en élastomère,
- et un deuxième élément rigide fixé à la deuxième armature.

Avantageusement, le premier élément rigide est une boîte de vitesses de véhicule et le deuxième élément rigide appartient à une caisse de véhicule.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un support antivibratoire selon une forme de réalisation de l'invention, avec les éléments auxquels est relié ce support dans un véhicule,
- la figure 2 est une vue en perspective du support antivibratoire de la figure 1, le support étant seul,
- et la figure 3 est une vue de dessous du support antivibratoire de la figure 2.

Sur les différentes figures, les mêmes références désignent des éléments identiques ou similaires.

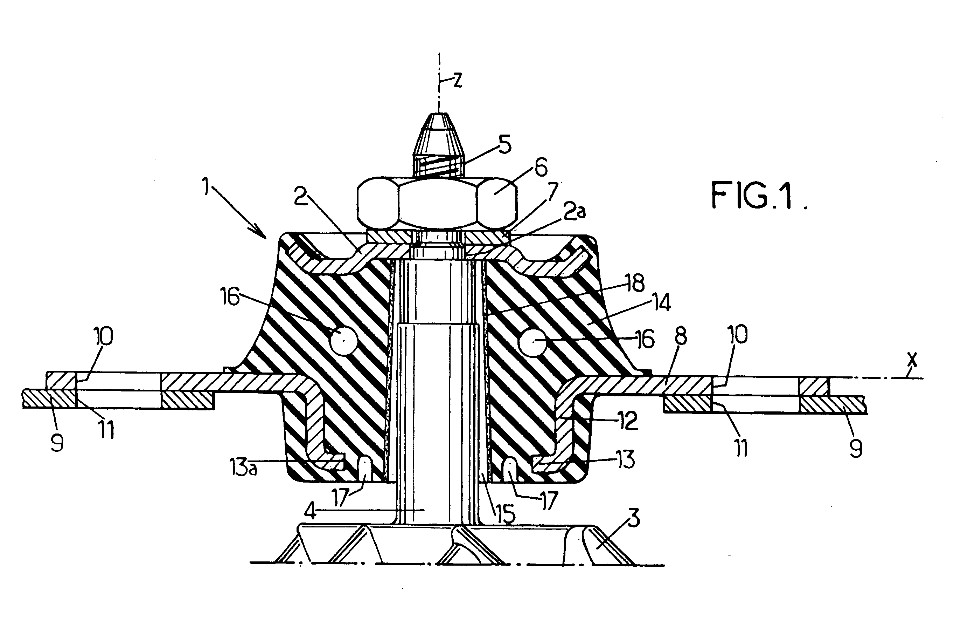

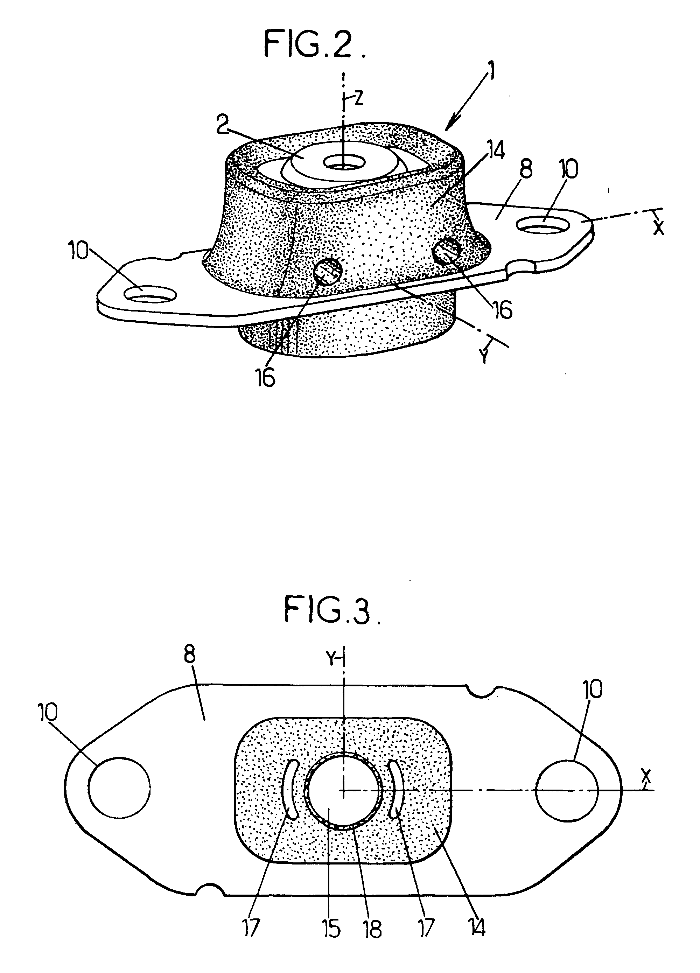

Comme représenté sur les figures 1 à 3, l'invention concerne un support antivibratoire 1 qui comporte une première armature métallique rigide 2, constituée par exemple par une plaque de tôle découpée et emboutie sensiblement en forme de disque horizontal.

La première armature 2 est reliée à un premier élément rigide, par exemple une boîte de vitesses 3 de véhicule qui est suspendue à ladite première armature 2 par l'intermédiaire d'une tige de liaison rigide 4 de forme sensiblement cylindrique à section circulaire, qui s'étend selon un axe vertical Z.

La tige de liaison 4 comporte par exemple une extrémité supérieure filetée 5 de diamètre réduit, qui traverse un trou central circulaire 2a percé dans la première armature 2, tandis qu'un écrou 6 peut par exemple être vissé sur l'extrémité filetée 5 de la tige 4, avec le cas échéant interposition d'une rondelle 7 entre l'écrou 6 et la première armature 4.

Par ailleurs, le support antivibratoire 1 comporte en outre une deuxième armature métallique rigide 8, qui se présente par exemple sous la forme d'une plaque de tôle horizontale adaptée pour venir en appui sur une partie 9 de la caisse du véhicule (la partie 9 en question peut par exemple être une console fixée au reste de la caisse du véhicule). La deuxième armature 8 peut par exemple être fixée à la partie 9 de la caisse du véhicule par des boulons (non représentés) traversant des trous 10, 11 ménagés en correspondance mutuelle dans la deuxième armature 8 et dans la partie 9 de la caisse du véhicule.

La deuxième armature 8 comporte une partie centrale emboutie 12 qui forme une cuvette vers le bas, le fond 13 de cette cuvette étant percé d'un trou central 13a circulaire qui est centré sur l'axe Z et qui est traversé par la tige de liaison 4.

les première et deuxième armatures 2, 8 sont reliées entre elles par un corps en élastomère 14 qui est surmoulé et adhérisé sur lesdites armatures, en recouvrant toute la cuvette 12 formée par la deuxième armature.

Ce corps en élastomère comporte un puits central circulaire 15 qui est centré sur l'axe Z, qui est disposé au centre du trou central 13 de la deuxième armature et qui est traversé par la tige de liaison 4 avec un faible jeu selon les deux axes horizontaux X, Y.

Le puits central 15 présente avantageusement une forme légèrement tronconique divergeant vers le bas, mais il pourrait également présenter une forme quelconque, par exemple cylindrique.

Le corps en élastomère 14 peut comporter avantageusement des alvéoles 16, qui dans l'exemple représenté sont au nombre de deux et se présentent sous la forme de trous cylindriques traversant s'étendant selon l'axe horizontal Y et disposés entre les première et deuxième armatures 2, 8 selon l'axe Z.

Avantageusement le corps en élastomère 14 peut comporter également des fentes 17 qui sont ménagées au niveau de son extrémité inférieure, entre le trou central 13a du fond 13 de la deuxième armature et le puits central 15. Dans l'exemple représenté, ces fentes 17 sont au nombre de deux et sont disposées de part et d'autre du puits central 15 selon l'axe horizontal X, chacune de ces fentes 17 présentant une forme en arc de cercle centré sur l'axe Z.

Enfin, la paroi intérieure du corps en élastomère, qui délimite le puits central 15, est revêtue d'une chemise intérieure 18 qui est adhérisée au corps en élastomère lors du moulage de ce corps et qui est ainsi solidarisée en totalité avec le corps en élastomère.

La chemise 18 est réalisée en un matériau souple sensiblement inextensible et présentant une résistance à la flexion sensiblement nulle. Par exemple, la chemise 18 peut être réalisée en tissu, notamment à base de polyester et/ou de TEFLON®.

A titre d'exemple, la chemise intérieure 18 peut être réalisée dans le matériau "SLYKSLEEVE 4430" commercialisé par la Société FEDERAL MOGUL, Compiègne, FRANCE.

Grâce à la présence de la chemise intérieure 18, la tige de liaison 4 ne vient pas frotter contre le corps en élastomère lorsqu'elle est en butée contre la paroi du puits 15 tout en étant animée de mouvements verticaux, ce qui se produit couramment pendant le fonctionnement du véhicule où la tige de liaison 4 est déplacée selon l'axe X dans une direction ou l'autre pour reprendre les couples imposés par les accélérations et décélérations du moteur.

De plus, dans ces circonstances, du fait que la chemise intérieure 18 est inextensible et solidaire du corps en élastomère, elle mobilise une grande partie du corps en élastomère tout autour du puits central 15 pour reprendre les efforts de butée de la tige de liaison 4, ce qui permet de répartir au mieux les contraintes imposées au corps en élastomère et donc de diminuer la valeur de ces contraintes. On obtient ainsi une meilleure tenue du corps en élastomère en endurance.

Par ailleurs, les fentes 17 susmentionnées, et dans une certaine mesure les alvéoles 16, permettent de diminuer les contraintes de traction imposées à la chemise intérieure 18 lorsque la tige dé liaison 4 vient en butée contre la paroi du puits central 15, en évitant ainsi d'éventuelles déchirures de ladite chemise 18.

Enfin, les alvéoles 16 permettent avantageusement de diminuer la raideur du corps en élastomère 14 selon l'axe vertical Z, raideur qui serait légèrement augmentée par la présence de la chemise intérieure 18 en l'absence de ces alvéoles.

On notera enfin que la chemise intérieure 18 ne modifie pas le comportement du support antivibratoire lorsque le moteur fonctionne au ralenti, puisque la tige de liaison 4 n'est alors pas en contact avec la paroi du puits central 15.

## Revendications

1. Support antivibratoire destiné à être interposé aux fins d'amortissement et de liaison entre deux éléments rigides (3, 9), ce support comportant :
- une première armature rigide (2) destinée à être reliée au premier élément rigide (3) par l'intermédiaire d'une tige de liaison (4),
- une deuxième armature rigide (8) destinée à être reliée au deuxième élément rigide (9) et comportant une ouverture centrale (13a) destinée à être traversée par ladite tige de liaison (4),
- un corps en élastomère (14) reliant la première armature (2) à la deuxième armature (8), ce corps en élastomère étant adapté pour supporter une charge permanente selon un premier axe vertical (Z) et comportant un puits central (15) s'étendant selon ledit premier axe (Z) au centre de l'ouverture centrale (13a) de la deuxième armature, ledit puits central étant destiné à recevoir un la tige de liaison (4) et ladite tige de liaison étant destinée coopérer par butée avec le corps en élastomère (14) au niveau dudit puits central pour limiter les débattements relatifs entre la première et deuxième armatures selon deux axes horizontaux (X, Y) perpendiculaires entre eux,
**caractérisé en ce que** le puits central (15) est revêtu d'une chemise intérieure (18) adhérisée au corps en élastomère (14) de façon à être entièrement solidaire dudit corps en élastomère, cette chemise intérieure étant réalisée en un matériau souple sensiblement inextensible et n'offrant sensiblement pas de résistance en flexion.

2. Support antivibratoire selon la revendication 1, dans lequel la chemise intérieure (18) du puits central est réalisé en tissu.

3. Support antivibratoire selon la revendication 2, dans lequel le tissu de la chemise intérieure (18) comprend au moins du polyester.

4. Support antivibratoire selon la revendication 2 ou la revendication 3, dans lequel le tissu de la chemise intérieure (18) comprend au moins du TEFLON®.

5. Support antivibratoire selon l'une quelconque des revendications précédentes, dans lequel le corps en élastomère (14) comporte des fentes (17) interposées entre le trou central (13a) de la deuxième armature et le puits central (15.

6. Support antivibratoire selon la revendication 5, dans lequel le corps en élastomère comporte deux fentes (17) en arc de cercle centré sur le premier axe (Z) et disposées de part et d'autre du puits central (15) selon un deuxième axe (X) perpendiculaire au premier axe.

7. Support antivibratoire selon l'une quelconque des revendications précédentes, dans lequel le corps en élastomère (14) comporte des alvéoles (16) disposées entre la première et deuxième armatures (2, 8) selon le premier axe (Z), pour assouplir ledit corps en élastomère parallèlement audit premier axe.

8. Support antivibratoire selon la revendication 7, dans lequel les alvéoles (16) sont des trous ménagés dans le corps en élastomère (14) selon un troisième axe horizontal (Y).

9. Dispositif antivibratoire comprenant :
- un support antivibratoire (1) selon l'une quelconque des revendications précédentes,
- un premier élément rigide (3) fixé à la première armature par l'intermédiaire d'une tige de liaison rigide (4) qui s'étend selon le premier axe (Z) à l'intérieur du puits central (15) du corps en élastomère, avec un faible jeu horizontal entre ladite tige de liaison et le corps en élastomère (14),
- et un deuxième élément rigide (9) fixé à la deuxième armature (8).

10. Dispositif antivibratoire selon la revendication 9, dans lequel le premier élément rigide (3) est une boîte de vitesses de véhicule et le deuxième élément rigide (9) appartient à une caisse de véhicule.

## Patentansprüche

1. Schwingungsdämpfendes Lager, das dazu bestimmt ist, zu Zwecken der Dämpfung und der Verbindung zwischen zwei starren Elementen (3, 9) angeordnet zu werden, wobei das Lager folgendes aufweist:
- eine erste starre Armatur (2), die mit einem ersten starren Element (3) über eine Verbindungsstange (4) verbindbar ist,
- eine zweite starre Armatur (8) zur Verbindung mit dem zweiten starren Element (9), die eine mittige Öffnung (13a) aufweist, durch welche hindurch sich die besagte Verbindungsstange (4) erstrecken kann,
- einen Elastomerkörper (14), der die erste Armatur (2) mit der zweiten Armatur (8) verbindet, wobei dieser Elastomerkörper dazu ausgestaltet ist, eine permanente Belastung entlang einer ersten vertikalen Achse (Z) auszuhalten, und einen mittigen Schacht (15) aufweist, der sich entlang der ersten Achse (Z) in der Mitte der mittigen Öffnung (13a) der zweiten Armatur erstreckt, wobei dieser mittige Schacht dazu bestimmt ist, die Verbindungsstange (4) aufzunehmen, und wobei die Verbindungsstange dazu bestimmt ist, durch Anstoßen mit dem Elastomerkörper (14) auf der Höhe des mittigen Schachts zusammenzuwirken, um die relative Durchfederung zwischen der ersten und der zweiten Armatur entlang zwei horizontaler Achsen (X, Y) zu beschränken, die zueinander rechtwinklig angeordnet sind,
**dadurch gekennzeichnet, dass** der mittige Schacht (15) innen von einer Auskleidung (18) bedeckt ist, die am Elastomerkörper (14) so anhaftet, dass sie vollständig mit dem Elastomerkörper verbunden ist, wobei diese innere Auskleidung aus einem weichen Material besteht, das im Wesentlichen nicht dehnbar ist und im Wesentlichen keinen Biegungswiderstand bietet.

2. Schwingungsdämpfendes Lager nach Anspruch 1, wobei die innere Auskleidung (18) des mittigen Schachts aus einem Textilmaterial besteht.

3. Schwingungsdämpfendes Lager nach Anspruch 2, wobei das Textilmaterial der inneren Auskleidung (18) zumindest Polyester aufweist.

4. Schwingungsdämpfendes Lager nach Anspruch 2 oder 3, wobei das Textilmaterial der inneren Auskleidung (18) zumindest Teflon aufweist.

5. Schwingungsdämpfendes Lager nach einem der vorangehenden Ansprüche, wobei der Elastomerkörper (14) Kerben (17) aufweist, die zwischen der mittigen Öffnung (13a) der zweiten Armatur und dem mittigen Schacht (15) angeordnet sind.

6. Schwingungsdämpfendes Lager nach Anspruch 5, wobei der Elastomerkörper zwei Kerben (17) im Kreisbogen aufweist, die auf der ersten Achse (X) zentriert sind und auf beiden Seiten des mittigen Schachts (15) entlang einer zweiten Achse (X) angeordnet sind, die rechtwinklig zur ersten Achse verläuft.

7. Schwingungsdämpfendes Lager nach einem der vorangehenden Ansprüche, wobei der Elastomerkörper (14) Waben (16) aufweist, die zwischen der ersten zwei und der zweiten Armatur (8) entlang der ersten Achse (Z) angeordnet sind, um den Elastomerkörper parallel zu dieser ersten Achse weicher zu machen.

8. Schwingungsdämpfendes Lager nach Anspruch 7, wobei die Waben (16) Öffnungen sind, die in dem Elastomerkörper (14) entlang einer dritten horizontalen Achse (Y) ausgebildet sind.

9. Schwingungsdämpfende Einrichtung mit:
- einem schwingungsdämpfenden Lager (1) nach einem der vorangehenden Ansprüche, und
- einem ersten starren Element (3), das an der ersten Armatur über eine starre Verbindungsstange (4) befestigt ist, die sich entlang der ersten Achse (Z) im Inneren des mittigen Schachts (15) des Elastomerkörpers erstreckt, mit einem geringen horizontalen Spiel zwischen der Verbindungsstange und dem Elastomerkörper (14),
- und einem zweiten starren Element (9), das an der zweiten Armatur (8) befestigt ist.

10. Schwingungsdämpfende Einrichtung nach Anspruch 9, wobei das erste starre Element (3) ein Getriebe eines Fahrzeugs ist und das zweite starre Element (9) zu einer Fahrzeugkarosserie gehört.

## Claims

1. Anti-vibration support intended to be inserted between two rigid elements (3, 9) for the purposes of damping and connection, this support comprising:
- a first rigid fitting (2) intended to be connected to the first rigid element (3) by means of a connecting rod (4),
- a second rigid fitting (8) intended to be connected to the second rigid element (9) and comprising a central opening (13a) intended to be traversed by the said connecting rod (4),
- an elastomer body (14) connecting the first fitting (2) to the second fitting (8), this elastomer body being adapted to support a permanent load along a first vertical axis (Z) and comprising a central well (15) extending along the said first axis (Z) in the centre of the central opening (13a) in the second fitting, the said central well being intended to receive a connecting rod (4) and the said connecting rod being adapted to cooperate with and abut against the elastomer body (14) at the said central well in order to limit the relative displacement between the first and second fittings along two horizontal axes (X, Y) perpendicular to one another,
**characterised in that** the central well (15) is covered by a liner (18) bonded to the elastomer body (14) so that it is completely integral with the said elastomer body, this liner being made of a substantially inextensible flexible material offering substantially no bending resistance.

2. Anti-vibration support according to claim 1, in which the liner (18) of the central well is made of fabric.

3. Anti-vibration support according to claim 2, in which the fabric of the liner (18) comprises at least polyester.

4. Anti-vibration support according to claim 2 or claim 3, in which the fabric of the liner (18) comprises at least TEFLON®.

5. Anti-vibration support according to any one of the preceding claims, in which the elastomer body (14) comprises slots (17) inserted between the central hole (13a) in the second fitting and the central well (15).

6. Anti-vibration support according to claim 5, in which the elastomer body comprises two slots (17) in the shape of the arc of a circle centred on the first axis (Z) and disposed on either side of the central well (15) along a second axis (X) perpendicular to the first axis.

7. Anti-vibration support according to any one of the preceding claims, in which the elastomer body (14) comprises cavities (16) disposed between the first and second fittings (2, 8) along the first axis (Z) in order to render the said elastomer body more flexible parallel to the said first axis.

8. Anti-vibration support according to claim 7, in which the cavities (16) are holes formed in the elastomer body (14) along a third horizontal axis (Y).

9. Anti-vibration device comprising:
- an anti-vibration support (1) according to any one of the preceding claims;
- a first rigid element (3) fixed to the first fitting by means of a rigid connecting rod (4) extending along the first axis (Z) in the interior of the central well (15) of the elastomer body, with slight horizontal play between the said connecting rod and the elastomer body (14),
- and a second rigid element (9) fixed to the second fitting (8).

10. Anti-vibration device according to claim 9, in which the first rigid element (3) is a vehicle gearbox and the second rigid element (9) forms part of a vehicle body.
